# EUROPÄISCHE PATENTANMELDUNG

(11) **EP 3 928 942 A1**
(43) Veröffentlichungstag der Anmeldung: **29.12.2021**
(21) Anmeldenummer: 21177263.7
(22) Anmeldetag: 01.06.2021
(51) Int. Cl.: B29B 7/60, B29B 7/42, B29B 7/74, B29B 7/82, B29C 48/50, B29C 48/285, B29C 48/25

(54) **VORRICHTUNG ZUM KONTINUIERLICHEN SPEISEN VON EXTRUSIONS- UND/ODER WALZMASCHINEN MIT EINEM KAUTSCHUKMISCHUNGSFELL, EXTRUDERSYSTEM UMFASSEND DIE VORRICHTUNG UND DEREN VERWENDUNGEN**

(30) Priorität: 23.06.2020 DE 102020207754
(71) Anmelder: Continental Reifen Deutschland GmbH, 30165 Hannover (DE)
(72) Erfinder: Sharifi, Monir, 30419 Hannover (DE)
(74) Vertreter: Continental Corporation

(57) **Zusammenfassung**

Vorrichtung zum kontinuierlichen Speisen von Extrusions- und/oder Walzmaschinen mit einem Kautschukmischungsfell, umfassend mindestens einen Trichter zum Aufnehmen eines oder mehrerer Kautschukmischungsfelle, wobei der Trichter eine Trichtermittelachse und mindestens eine planare Innenwand aufweist, dadurch gekennzeichnet, dass der Trichter an der einen oder an der mindestens einen planaren Innenwand freilaufende Rollen aufweist. Offenbart ist auch ein Extrudersystem umfassend die Vorrichtung sowie die Verwendung der Vorrichtung und des Extrudersystems.

## Beschreibung

Die Erfindung betrifft eine Vorrichtung zum kontinuierlichen Speisen von Extrusions- und/oder Walzmaschinen mit einem Kautschukmischungsfell. Die Erfindung betrifft auch ein Extrudersystem umfassend die Vorrichtung sowie die Verwendung der Vorrichtung und des Extrudersystems.

In der Kautschukindustrie ist man bestrebt das Herstellungsverfahren so weit wie möglich zu automatisieren. Der Herstellungsprozess von verschiedenen Kautschukprodukten ist meist in einen diskontinuierlichen Teil mit einen oder mehreren Prozessschritten und in einen kontinuierlichen Herstellungsteil aufgeteilt. Der diskontinuierliche Teil umfasst dabei meistens insbesondere das Anmischen einer unvulkanisierten Kautschukmischung aus verschiedenen Kautschukmischungsbestandteilen. Auf diesen diskontinuierlichen Teil folgt meist der kontinuierliche Herstellungsteil, welcher häufig das Ausformen der angemischten unvulkanisierten Kautschukmischung mittels Extrusions- und/oder Walzmaschine umfasst.
Oftmals treten Probleme an der Schnittstelle zwischen dem diskontinuierlichen Teil des Herstellungsverfahrens und dem kontinuierlichen Teil des Herstellungsverfahrens auf. Ein Problem dabei ist, dass bei den Herstellungsschritten, bei denen die Herstellung vom diskontinuierlichen Teil zum kontinuierlichen Teil übergeht, aufgrund dieses Wechsels starke Schwankungen in den Produkteigenschaften des hergestellten Kautschukprodukten auftreten. Diese Schwankungen wiederum, wie beispielsweise Schwankungen, in der Geometrie oder in dem Gewicht des hergestellten Kautschukprodukts, müssen insbesondere für automatisierte Verfahren minimiert werden, damit der kontinuierliche Teil des Herstellungsverfahrens so weit möglich automatisiert und dabei gleichzeitig möglichst qualitativ hochwertige technische Gummiartikel herstellt. In den häufigsten Fällen werden an der vorstehend beschriebenen Schnittstelle zwischen dem diskontinuierlichen und kontinuierlichen Herstellungsverfahren Extruder eingesetzt.

Im Stand der Technik sind verschiedene Extruder, welche im ersten kontinuierliche Herstellungsschritt und somit nach dem vorangegangenen letzten diskontinuierlich Herstellungsschritt eingesetzt werden, bekannt:
EP 709172 B1 offenbart eine "Vorrichtung (1) zum kontinuierlichen Speisen von Extrusions- und/oder Walzmaschinen (20) mit zähflüssigem Material, wie Gummi und dergl., das von Maschinen mit diskontinuierlichem Zyklus kommt, dadurch gekennzeichnet, daß sie einen vertikalen Trichter (2) aufweist, in dem auf wenigstens zwei gegenüberliegenden Seiten (3) ein konischer Bohrer (7) untergebracht ist, der geneigt bezüglich der vertikalen Achse der Maschine ist, um ein "V" zu bilden, das zu der Innenseite des Trichters (2) gerichtet ist, daß weiterhin eine Einrichtung (8) zum unabhängigen Antreiben der Bohrer (7), eine Einrichtung (7f, 3f, 4f) zum Kühlen von diesen und wenigstens einer Wand (4) des Trichters (2) sowie eine Einrichtung (9) zum Kippen der Bohrer (7) aus der geneigten Arbeitsstellung in eine im wesentlichen horizontale Stellung, in der die Maschine in Stillstand ist, vorgesehen sind" (s. Anspruch 1).

WO 2011014902 A1 offenbart einen "Feeder für einen nachgeschalteten Prozess, wobei der Feeder umfasst; einen oder mehrere Trichter zum Lagern von Material, einen oder mehrere Förderer zum Transportieren des Materials von einem oder mehreren Trichtern zu einem nachgeschalteten Prozess, einen oder mehrere Regler zum Steuern des Materialflusses, der einem oder mehreren Förderern von einem oder mehreren Trichtern zugeführt wird, und mehrere Öffnungen, die der Zuführung zum Austreten von Luft aus dem Material zugeordnet sind" (vgl. Anspruch 1).

Eine Aufgabe, die der Erfindung zugrunde liegt, besteht darin, eine Vorrichtung oder ein Extrudersystem bereitzustellen, welches die Produktschwankungen, insbesondere die Schwankungen im Metergewicht, des mittels des nachgeschalteten Extruders hergestellten Endlosstreifens verringert.

Gelöst wird diese Aufgabe erfindungsgemäß durch eine Vorrichtung zum kontinuierlichen Speisen von Extrusions- und/oder Walzmaschinen mit einem oder mehreren Kautschukmischungsfellen, umfassend
- mindestens einen Trichter zum Aufnehmen eines oder mehrerer Kautschukmischungsfelle, wobei der Trichter eine Trichtermittelachse und mindestens eine planare Innenwand aufweist,
dadurch gekennzeichnet, dass
der Trichter an der einen oder an der mindestens einen planaren Innenwand angeordnete freilaufende Rollen aufweist. Der Trichter ist dabei bevorzugt zum Aufnehmen eines zusammengesetzten Kautschukmischungsfelles aus zwei planparallel übereinander angeordneten Kautschukmischungsfellen eingerichtet.

Es ist eine große Leistung der vorliegenden Erfindung, herausgefunden zu haben, dass durch den erfindungsgemäßen Einsatz eines vorstehend beschriebenen Trichters mit frei laufenden Rollen Extruder mit Kautschukmischungsfelle gleichmäßiger gefüttert werden können und dies überraschenderweise zu einer Verringerung der Druckschwankungen im Extruderzylinder des Extruders während des Extrudierens der Kautschukmischung führt. Unerwarteter Weise führt die die Reduktion dieser Druckschwankungen zu einer Stabilisation des Metergewichts des mittels des Extrudierens des Kautschukmischungsfelles hergestellten Extrudats. Die Stabilisation des Metergewichts des Extrudats kann dadurch gemessen werden, dass das real erreichte Metergewicht geringere Abweichungen vom anvisierten, idealen Metergewicht aufweist. In besonders hohem Maße können die vorstehend beschriebenen Druckschwankungen und damit die Schwankungen im Metergewicht des resultierenden Extrudats bei solchen Kautschukmischungen verringert werden, welche eine geringe Grünfestigkeit oder eine hohe Klebrigkeit aufweisen.

Im Rahmen der vorliegenden Erfindung werden die Ausdrücke "füttern", "speisen", "hinzuführen" und "hinzufügen" synonym verwendet.

Im Rahmen der vorliegenden Erfindung umfasst der Ausdruck "freilaufende Rollen" insbesondere Rollen, welche nicht von einem Aktuator oder einer Bremse in ihrer Drehung beschleunigt bzw. gebremst werden können. Ein Beispiel solcher freilaufenden Rollen ist zudem in Dokument EP 1228954 A2, siehe Absatz [0019], beschrieben.

Im Rahmen der vorliegenden Erfindung umfasst der Ausdruck "Trichter" insbesondere hohlzylindrischen Gefäße mit einem sich entlang der Trichterachse des Trichters verjüngenden Querschnitt, wobei das hohlzylindrische Gefäß an dem einen Ende der Trichterachse eine Öffnung aufweist und an dem anderen verjüngten Ende eine im Vergleich dazu kleinere Öffnung aufweist.

Bevorzugt ist eine erfindungsgemäße Vorrichtung wie vorstehend beschrieben oder wie vorstehend als bevorzugt beschrieben, wobei der Trichter drei, vier, fünf, sechs oder mehr als sechs planare Innenwände aufweist, wobei der Trichter bevorzugt einen dreieckigen, viereckigen, fünfeckigen, sechseckigen beziehungsweise noch höhereckigen Querschnitt aufweist, wobei der besagte Querschnitt senkrecht zur Trichtermittelachse verläuft, und/oder zumindest zwei, drei oder sämtliche der Innenwände des Trichters freilaufende Rollen aufweisen. Der besagte Querschnitt des Trichters muss dabei nicht axialsymmetrisch um dessen Trichterachse sein. Zudem müssen auch nicht sämtliche Seitenwände des Trichters die besagten freilaufenden Rollen aufweisen. Es ist vorteilhaft,

Ein Vorteil des vorstehend beschriebenen Aspekts der vorliegenden Erfindung ist, wenn zumindest die zwei, drei oder mehr Seitenwände des Trichters die besagten freilaufenden Rollen aufweisen, welche mit dem hinzugespeisten Kautschukmischungsfell in Kontakt kommen können, führt dies zu einem gleichmäßigeren Füttern.

Bevorzugt ist eine erfindungsgemäße Vorrichtung wie vorstehend beschrieben oder wie vorstehend als bevorzugt beschrieben, wobei sämtliche planare Innenwände freilaufende Rollen aufweisen.

Ein Vorteil des vorstehend beschriebenen Aspekts der vorliegenden Erfindung ist, dass das Füttern des Kautschukmischungsfells im Vergleich zu vorstehend beschriebenen oder vorstehend als bevorzugt beschriebenen andere erfindungsgemäßen Vorrichtungen noch gleichmäßiger ist, wenn die Innenwände, an denen die freilaufenden Rollen angeordnet sind, planar sind. Somit werden die vorstehend beschriebenen Vorteile noch weiter verstärkt.

Bevorzugt ist eine erfindungsgemäße Vorrichtung wie vorstehend beschrieben oder wie vorstehend als bevorzugt beschrieben, wobei die freilaufenden Rollen Heizeinheiten zum Anheben der Temperatur der Rollenoberfläche aufweisen, wobei die Heizeinheiten Wärmestrahler oder in den Rollen integrierte Heizelemente aufweisen.

Ein Vorteil des vorstehend beschriebenen Aspekts der vorliegenden Erfindung ist, dass das Füttern des Kautschukmischungsfells durch eine geringere Friktion zur Oberfläche der freilaufenden Rollen im Vergleich zu vorstehend beschriebenen oder vorstehend als bevorzugt beschriebenen andere erfindungsgemäßen Vorrichtungen noch gleichmäßiger ist. Somit werden die vorstehend beschriebenen Vorteile noch weiter verstärkt.

Bevorzugt ist eine erfindungsgemäße Vorrichtung wie vorstehend beschrieben oder wie vorstehend als bevorzugt beschrieben, wobei die Oberfläche der Innenwände des Trichters und/oder die Oberfläche der freilaufenden Rollen
- aus einem Stahl besteht
oder
- mit einem Polymer-Kunststoff oder mit einer Textillage beschichtet ist, wobei zum Verschieben der Textillage oder des Polymer-Kunststoffs jeweils im trockenen Zustand gegen die Oberfläche eines gemäß DIN EN 10027-1:2017-01 bezeichneten C60E-Stahls im trockenen Zustand eine statische Gleitreibungskraft Fs im Bereich von 1 N bis 60 N, bevorzugt im Bereich von 10 N bis 30 N, aufweist, jeweils gemessen nach DIN EN ISO 8295. Die Durchführung der Messung der Gleitreibungskraft Fs wird bevorzugt so ausgeführt, wie in Absatz [0139] der EP 2956100 A1 beschrieben.

Ein Vorteil des vorstehend beschriebenen Aspekts der vorliegenden Erfindung ist, dass das Füttern des Kautschukmischungsfells über eine Oberfläche der freilaufenden Rollen mit einer relative hohen Gleitreibungskraft Fs wie vorstehend beschrieben im Vergleich zu vorstehend beschriebenen oder vorstehend als bevorzugt beschriebenen andere erfindungsgemäßen Vorrichtungen überraschenderweise noch gleichmäßiger ist. Somit werden die vorstehend beschriebenen Vorteile noch weiter verstärkt.

Besonders bevorzugt ist eine erfindungsgemäße Vorrichtung wie vorstehend beschrieben oder wie vorstehend als bevorzugt beschrieben, wobei die Oberfläche der freilaufenden Rollen Erhebungen aufweisen, wobei die Erhebungen bevorzugt eine radiale Höhe im Bereich 0,01 mm bis 10 mm aufweisen.
Die Erhebungen sind in der vorstehend als besonders bevorzugt beschriebenen Vorrichtung dabei insbesondere so ausgebildet, dass beim Verschieben der Oberfläche mit den besagten Erhebungen im trockenen Zustand gegen die Oberfläche eines gemäß DIN EN 10027-1:2017-01 bezeichneten C60E-Stahls eine statische Gleitreibungskraft Fs im Bereich von 1 N bis 60 N, bevorzugt im Bereich von 10 N bis 30 N, erreicht wird, jeweils gemessen nach DIN EN ISO 8295. Die Durchführung der Messung der Gleitreibungskraft Fs wird bevorzugt so ausgeführt, wie in Absatz [0139] der EP 2956100 A1 beschrieben.

Ein Vorteil des vorstehend beschriebenen Aspekts der vorliegenden Erfindung ist, dass das Füttern des Kautschukmischungsfells durch eine geringere verfügbare Oberfläche der freilaufenden Rollen den Erhebungen wie vorstehend beschrieben im Vergleich zu vorstehend beschriebenen oder vorstehend als bevorzugt beschriebenen andere erfindungsgemäßen Vorrichtungen noch gleichmäßiger ist. Somit werden die vorstehend beschriebenen Vorteile noch weiter verstärkt.

Besonders bevorzugt ist eine erfindungsgemäße Vorrichtung wie vorstehend beschrieben oder wie vorstehend als bevorzugt beschrieben, wobei die Erhebungen ein Streifenprofil mit parallel zueinander verlaufenden Streifen bilden, wobei die Streifen bevorzugt in axialer Richtung oder in Umfangsrichtung der Rollen verlaufen, die Streifen besonders bevorzugt in Umfangsrichtung der Rollen verlaufen. Die Erhebungen sind in der vorstehend als besonders bevorzugt beschriebenen Vorrichtung dabei insbesondere so ausgebildet, dass zum Verschieben der Oberfläche mit den besagten Erhebungen im trockenen Zustand gegen die Oberfläche eines gemäß DIN EN 10027-1:2017-01 bezeichneten C60E-Stahls eine statische Gleitreibungskraft Fs im Bereich von 1 N bis 60 N, bevorzugt im Bereich von 10 N bis 30 N, erreicht wird, jeweils gemessen nach DIN EN ISO 8295. Die Durchführung der Messung der Gleitreibungskraft Fs wird bevorzugt so ausgeführt, wie in Absatz [0139] der EP 2956100 A1 beschrieben.

Ein Vorteil des vorstehend beschriebenen Aspekts der vorliegenden Erfindung ist, dass das Füttern des Kautschukmischungsfells über eine Oberfläche der freilaufenden Rollen mit den Erhebungen wie vorstehend beschrieben im Vergleich zu vorstehend beschriebenen oder vorstehend als bevorzugt beschriebenen andere erfindungsgemäßen Vorrichtungen überraschenderweise noch gleichmäßiger ist. Somit werden die vorstehend beschriebenen Vorteile noch weiter verstärkt.

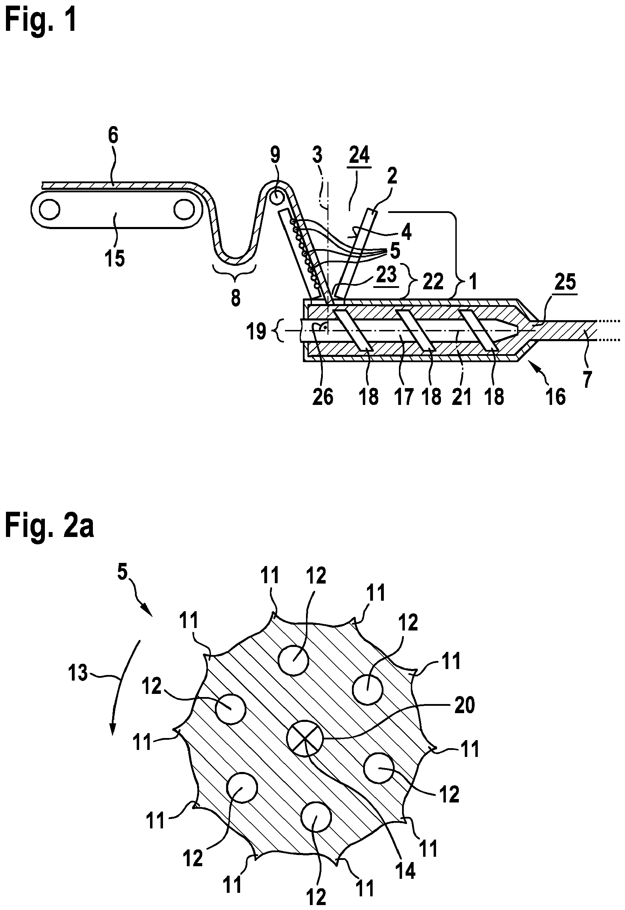

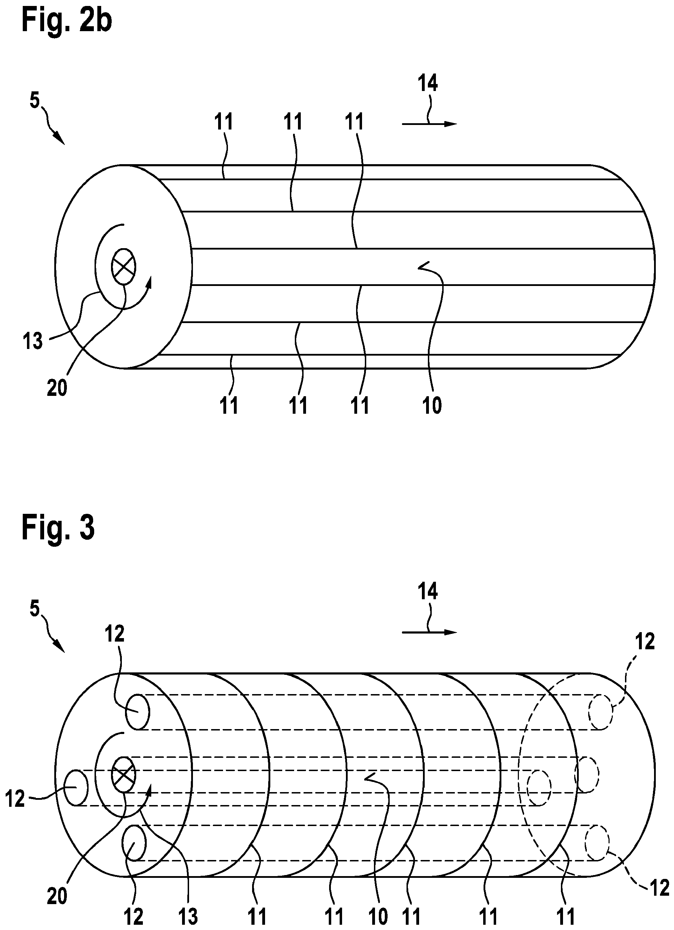

Vorstehend beschriebene Rollen mit in axialer Richtung verlaufenden Streifen sind nachstehend in Figur 2 dargestellt und in der entsprechenden Figurenbeschreibung beschrieben. Vorstehend beschriebene Rollen mit in Umfangsrichtung verlaufenden Streifen sind nachstehend in Figur 3 dargestellt und in der entsprechenden Figurenbeschreibung beschrieben.

Die vorstehend beschriebenen vorteilhaften Aspekte einer erfindungsgemäßen Vorrichtung zum kontinuierlichen Speisen von Extrusions- und/oder Walzmaschinen mit einem Kautschukmischungsfell gelten auch für sämtliche Aspekte eines nachstehend beschriebenen Extrudersystems und die nachstehend diskutierten vorteilhaften Aspekte erfindungsgemäßer Extrudersysteme gelten entsprechend für sämtliche Aspekte einer erfindungsgemäßen Vorrichtung zum kontinuierlichen Speisen von Extrusions- und/oder Walzmaschinen mit einem Kautschukm ischungsfell.

Die Erfindung betrifft auch ein Extrudersystem zum Extrudieren einer Kautschukmischung, umfassend mindestens einen Extruder und eine zum Speisen von Kautschukmischungsfellen an den Extruder angeordnete Vorrichtung nach den vorangehenden Ansprüchen, wobei der eine Extruder bevorzugt ein Einschneckenextruder ist.

Bevorzugt ist ein erfindungsgemäßes Extrudersystem wie vorstehend beschrieben oder wie vorstehend als bevorzugt beschrieben, wobei die Schneckenachse des Extruders und die Trichtermittelachse des Trichters der Vorrichtung zueinander einen Winkel im Bereich von 30° bis 160° bilden, bevorzugt im Bereich von 60° bis 100°, besonders bevorzugt einen Winkel von 90°.

Ein Vorteil des vorstehend beschriebenen Aspekts der vorliegenden Erfindung ist, dass das Füttern des Kautschukmischungsfells durch die besagten Winkel wie vorstehend beschrieben im Vergleich zu vorstehend beschriebenen anderen erfindungsgemäßen Extrudersystemen noch gleichmäßiger ist. Somit werden die vorstehend beschriebenen Vorteile noch weiter verstärkt.

Bevorzugt ist ein erfindungsgemäßes Extrudersystem wie vorstehend beschrieben oder wie vorstehend als bevorzugt beschrieben, wobei das Extrudersystem eine dem einen Trichter vorgeschaltete Fördereinheit zum Befördern eines Kautschukmischungsfells in den Trichter aufweist, wobei die Fördereinheit bevorzugt ein Förderband ist.

Ein Vorteil des vorstehend beschriebenen Aspekts der vorliegenden Erfindung ist, dass das Füttern des Kautschukmischungsfells durch die Fördereinheit wie vorstehend beschrieben im Vergleich zu vorstehend beschriebenen oder vorstehend als bevorzugt beschriebenen anderen erfindungsgemäßen Extrudersystemen noch gleichmäßiger ist. Somit werden die vorstehend beschriebenen Vorteile noch weiter verstärkt.

Bevorzugt ist ein erfindungsgemäßes Extrudersystem wie vorstehend beschrieben oder wie vorstehend als bevorzugt beschrieben, wobei das verjüngte Ende des Trichters zumindest im Wesentlichen vertikal nach unten zeigt und/oder der Trichter oberhalb des Extruders angeordnet ist.

Ein Vorteil des vorstehend beschriebenen Aspekts der vorliegenden Erfindung ist, dass das Füttern des Kautschukmischungsfells noch gleichmäßiger ist. Somit werden die vorstehend beschriebenen Vorteile noch weiter verstärkt.

Die vorstehend beschriebenen vorteilhaften Aspekte einer erfindungsgemäßen Vorrichtung zum kontinuierlichen Speisen von Extrusions- und/oder Walzmaschinen mit einem Kautschukmischungsfell und eines erfindungsgemäßen Extrudersystems gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zum kontinuierlichen Speisen von Extrusions- und/oder Walzmaschinen mit einem Kautschukmischungsfell und eines erfindungsgemäßen Extrudersystems.

Die Erfindung betrifft auch eine Verwendung eines vorstehend beschriebenen oder vorstehend als bevorzugt beschriebenen Extrudersystems zur Herstellung eines extrudierten und zu einem Bauteil eines Fahrzeugluftreifens weiterverarbeitbaren Endlosstreifens, wobei der eine hergestellte Endlosstreifen bevorzugt zu einem Laufstreifen eines Reifenrohlings zugeschnitten wird, wobei der zugeschnittene Laufstreifen des Reifenrohlings besonders bevorzugt zu einem Laufstreifen eines Fahrzeugluftreifens vulkanisiert wird.

Ein Vorteil des vorstehend beschriebenen Aspekts der vorliegenden Erfindung ist, dass bei der Verarbeitung von Kautschukmischungen zu Bauteilen eines Fahrzeugluftreifens, insbesondere von Laufstreifen eines Fahrzeugluftreifens, Kautschukmischungen mit besonders hoher Klebrigkeit und/oder besonders geringer Grünfestigkeit eingesetzt werden. Der technische Effekt ist bei der Herstellung von Laufstreifen überraschend höher als bei der Herstellung von anderen Bauteilen eines Fahrzeugluftreifens. Eine hohe Klebrigkeit bzw. eine geringe Grünfestigkeit bei einer Kautschukmischung liegt im Rahmen der vorliegenden Erfindung beispielsweise dann vor, wenn zum Verschieben der besagten einen Kautschukmischung im trockenen Zustand gegen die Oberfläche eines gemäß DIN EN 10027-1:2017-01 bezeichneten C60E-Stahls im trockenen Zustand eine statische Gleitreibungskraft Fs im Bereich von 30 N bis 100 N, bevorzugt im Bereich von 40 N bis 60 N, erreicht wird, jeweils gemessen nach DIN EN ISO 8295.

Die Erfindung betrifft auch eine Verwendung einer vorstehend beschriebenen oder vorstehend als bevorzugt beschriebenen Vorrichtung zum kontinuierlichen Speisen von Extrusions- und/oder Walzmaschinen mit mindestens einem Kautschukmischungsfell.

### Figurenbeschreibung:

Es zeigt:
- Figur 1:: Eine Querschnittsansicht ein erfindungsgemäßes Extrudersystem zum Extrudieren einer Kautschukmischung, umfassend einen Extruder und eine zum Speisen von Kautschukmischungsfellen an den Extruder angeordnete erfindungsgemäße Vorrichtung;
- Figur 2a:: Eine Querschnittsansicht einer freilaufenden Rolle mit horizontal und somit in axialer Richtung verlaufenden Erhebungen auf der Rollenoberfläche und mit Heizeinheiten;
- Figur 2b:: Eine perspektivische Ansicht auf eine freilaufende Rolle mit horizontal und somit in axialer Richtung verlaufenden Erhebungen auf der Rollenoberfläche und ohne Heizeinheiten;
- Figur 3:: Eine perspektivische Ansicht auf eine freilaufende Rolle mit in Umfangsrichtung verlaufenden Erhebungen auf der Rollenoberfläche und mit Heizeinheiten.

Figur 1 zeigt eine schematische Darstellung eines erfindungsgemäßen Extrudersystems zum Extrudieren einer Kautschukmischung 6, 7, umfassend einen Extruder 16 und eine zum Speisen von Kautschukmischungsfellen 6 an den Extruder 16 angeordnete erfindungsgemäße Vorrichtung 1 zum kontinuierlichen Speisen von Extrusions- und/oder Walzmaschinen mit einem oder mehreren Kautschukmischungsfellen 6, wobei die Vorrichtung 1 mindestens einen Trichter 2 zum Aufnehmen eines oder mehrerer Kautschukmischungsfelle 6 umfasst, wobei der Trichter 2 eine Trichtermittelachse 3 und mindestens eine planare Innenwand 4 und an der einen oder an der mindestens einen planaren Innenwand 4 angeordneten freilaufende Rollen 5 aufweist.

Wie in Figur 1 dargestellt weist der Trichter 2 die Form eines Hohlzylinders auf, wobei sich der Hohlzylinder entlang der Trichterachse 3 des Trichters 2 verjüngt und somit an dem einen verjüngten Ende 22 eine im Vergleich zum anderen Ende kleinere Öffnung 23 aufweist und an dem anderen Ende der Trichterachse 3 eine größere Öffnung 24 aufweist. Die Trichterachse 3 weist einen Winkel 26 von 90° zur Schneckenachse 21 der Extruderschnecke 17 auf.
Während einer erfindungsgemäßen Verwendung wird das Kautschukmischungsfells 6 über ein Förderband 15 und eine Umlenkrolle 9 durch die größere Öffnung 24 des Trichters 2 in den besagten Trichter 2 befördert. Anschließend wird das Kautschukmischungsfells 6 über die freilaufenden Rollen 5 an der planaren Innenwand 4 des Trichters 2 in Richtung des verjüngten Endes 22 des Trichters 2 in den Extruder 16 gespeist. Die freilaufenden Rollen 5 werden somit nur durch das sich über sie bewegende Kautschukmischungsfell 6 in Drehung versetzt. Sobald das Kautschukmischungsfells die kleinere Öffnung 23 des Trichters 2 passiert, befindet sie sich im Extruder 16, wo sie mittels der Schneckenflügel 18 der Extruderschnecke 17 aufgrund der Drehung der Extruderschnecke 17 um ihre Schneckenachse 21 in Richtung Extruderausgang 25 gefördert und extrudiert wird. Nach dem Austreten der Kautschukmischung aus dem Extruderausgang 25 liegt somit eine extrudierte Kautschukmischung 7 vor, wobei die extrudierte Kautschukmischung 7 im Anschluss zu einem Laufstreifen eines Reifenrohlings zugeschnitten und in einen Reifenrohling als Laufstreifen des Reifenrohlings eingebaut werden kann. Der finale Schritte einer erfindungsgemäßen Verwendung wäre dann das Vulkanisierens des Reifenrohlings mit dem Laufstreifen aus der mittels des in Figur 1 gezeigten Extrudersystems extrudierten Kautschukmischung in einer Vulkanisationsform zu einem Fahrzeugluftreifen. Zudem ist die Schlaufe 8 des Kautschukmischungsfells 6 in Figur 1 gezeigt.

Figur 2a zeigt eine schematische Darstellung einer Querschnittsansicht einer freilaufenden Rolle 5 in einer ersten Ausführungsform, welche zum Einsatz in einer erfindungsgemäß Vorrichtung vorgesehen ist, wobei die freilaufende Rolle 5 horizontal und somit in axialer Richtung 14 verlaufende Erhebungen 11 auf der Rollenoberfläche 10 und Heizeinheiten 12 zum Anheben der Temperatur der Rollenoberfläche 10 aufweist. Zudem ist die Drehachse 20 der Rolle 5 in Figur 2a gezeigt.

Figur 2b zeigt eine schematische Darstellung einer perspektivische Ansicht einer freilaufenden Rolle 5 in einer weiteren Ausführungsform, welche zum Einsatz in einer erfindungsgemäß Vorrichtung vorgesehen ist, wobei die freilaufende Rolle 5 horizontal und somit in axialer Richtung 14 verlaufende Erhebungen 11 auf der Rollenoberfläche 10 aber keine Heizeinheiten aufweist. Die Erhebungen 10 bilden somit ein Streifenprofil mit parallel zueinander verlaufenden Streifen, wobei die Streifen in axialer Richtung 14 verlaufen. Zudem ist die Drehachse 20 der Rolle 5 in Figur 2b gezeigt.

Figur 3 zeigt eine schematische Darstellung einer perspektivische Ansicht einer freilaufenden Rolle 5 in einer weiteren Ausführungsform, welche zum Einsatz in einer erfindungsgemäß Vorrichtung vorgesehen ist, wobei die freilaufende Rolle 5 horizontal und somit in Umfangsrichtung 13 verlaufende Erhebungen 11 auf der Rollenoberfläche 10 und Heizeinheiten 12 zum Anheben der Temperatur der Rollenoberfläche 10 aufweist. Die Erhebungen 11 bilden somit ein Streifenprofil mit parallel zueinander verlaufenden Streifen, wobei die Streifen in Umfangsrichtung 13 der freilaufenden Rollen 5 verlaufen. Zudem ist die Drehachse 20 der Rolle 5 in Figur 3 gezeigt.

### Bezugszeichenliste:

1 erfindungsgemäße Vorrichtung
2 Trichter
3 Trichtermittelachse
4 planare Innenwand des Trichters
5 freilaufende Rolle einer planaren Innenwand des Trichters
6 Kautschukmischungsfell
7 extrudierte Kautschukmischung
8 Schlaufe eines Kautschukmischungsfells
9 Umlenkrolle zum Umlenken eines Kautschukmischungsfells
10 Oberfläche einer freilaufenden Rolle; Rollenoberfläche
11 Erhebungen auf der Oberfläche einer freilaufenden Rolle
12 Heizeinheiten zum Anheben der Temperatur der Rollenoberfläche
13 Umfangsrichtung der Rollen
14 axialer Richtung der Rollen
15 Förderband; Fördereinheit zum Befördern eines Kautschukmischungsfells in den Trichter
16 Extruder; Extrusionsmaschine
17 Extruderschnecke
18 Schneckenflügel der Extruderschnecke
19 Schneckenkern der Extruderschnecke
20 Drehachse einer freilaufenden Rolle
21 Schneckenachse
22 verjüngtes Ende des Trichters
23 kleinere Öffnung des Trichters
24 größere Öffnung des Trichters
25 Extruderausgang
26 Winkel zwischen Schneckenachse 21 und Trichterachse 3

## Patentansprüche

1. Vorrichtung zum kontinuierlichen Speisen von Extrusions- und/oder Walzmaschinen (16) mit einem oder mehreren Kautschukmischungsfellen (6), umfassend
- mindestens einen Trichter (2) zum Aufnehmen eines oder mehrerer Kautschukmischungsfelle (6), wobei der Trichter (2) eine Trichtermittelachse (3) und mindestens eine planare Innenwand (4) aufweist,
**dadurch gekennzeichnet, dass**
der Trichter (2) an der einen oder an der mindestens einen planaren Innenwand (4) angeordnete freilaufende Rollen (5) aufweist.

2. Vorrichtung nach Anspruch 1, wobei der Trichter (2) drei, vier, fünf, sechs oder mehr als sechs planare Innenwände (4) aufweist, wobei der Trichter (2) bevorzugt einen dreieckigen, viereckigen, fünfeckigen, sechseckigen beziehungsweise noch höhereckigen Querschnitt aufweist, wobei der besagte Querschnitt senkrecht zur Trichtermittelachse (3) verläuft, und/oder zumindest zwei, drei oder sämtliche der Innenwände (4) des Trichters (2) freilaufende Rollen (5) aufweisen.

3. Vorrichtung nach einem der vorangehenden Ansprüche, wobei sämtliche planare Innenwände (4) freilaufende Rollen (5) aufweisen.

4. Vorrichtung nach einem der vorangehenden Ansprüche, wobei die freilaufenden Rollen (5) Heizeinheiten (12) zum Anheben der Temperatur der Rollenoberfläche (10) aufweisen, wobei die Heizeinheiten (12) Wärmestrahler oder in den freilaufenden Rollen (5) integrierte Heizelemente aufweisen.

5. Vorrichtung nach einem der vorangehenden Ansprüche, wobei die Oberfläche (10) der freilaufenden Rollen (5) Erhebungen (11) aufweisen, wobei die Erhebungen (11) bevorzugt eine radiale Höhe im Bereich 0,01 mm bis 10 mm aufweisen.

6. Vorrichtung nach einem der vorangehenden Ansprüche, wobei die Erhebungen (11) ein Streifenprofil mit parallel zueinander verlaufenden Streifen bilden, wobei die Streifen bevorzugt in axialer Richtung (14) oder in Umfangsrichtung (15) der freilaufenden Rollen (5) verlaufen, die Streifen besonders bevorzugt in Umfangsrichtung (13) der freilaufenden Rollen (5) verlaufen.

7. Vorrichtung nach einem der vorangehenden Ansprüche, wobei die Oberfläche der der Innenwände (4) des Trichters (2) und/oder die Oberfläche (10) der freilaufenden Rollen (5)
- aus einem Stahl besteht
oder
- mit einem Polymer-Kunststoff oder mit einer Textillage beschichtet ist, wobei zum Verschieben der Textillage oder des Polymer-Kunststoffs jeweils im trockenen Zustand gegen die Oberfläche eines gemäß DIN EN 10027-1:2017-01 bezeichneten C60E-Stahls im trockenen Zustand eine statische Gleitreibungskraft Fs im Bereich von 1 N bis 60 N, bevorzugt im Bereich von 10 N bis 30 N, erreicht wird, jeweils gemessen nach DIN EN ISO 8295.

8. Extrudersystem zum Extrudieren einer Kautschukmischung, umfassend mindestens einen Extruder (16) und eine zum Speisen von Kautschukmischungsfellen (6) an den Extruder (16) angeordnete Vorrichtung nach den vorangehenden Ansprüchen, wobei der eine Extruder (16) bevorzugt ein Einschneckenextruder ist.

9. Extrudersystem nach dem vorangehenden Anspruch, wobei die Schneckenachse (21) des Extruders (16) und die Trichtermittelachse (3) des Trichters (2) der Vorrichtung (1) zueinander einen Winkel (26) im Bereich von 30° bis 160° bilden, bevorzugt im Bereich von 60° bis 100°, besonders bevorzugt einen Winkel (26) von 90°.

10. Extrudersystem nach den vorangehenden Ansprüchen 8 bis 9, wobei das Extrudersystem eine dem einen Trichter (2) vorgeschaltete Fördereinheit (15) zum Befördern eines Kautschukmischungsfells (6) in den Trichter (2) aufweist, wobei die Fördereinheit (15) bevorzugt ein Förderband ist.

11. Extrudersystem nach den vorangehenden Ansprüchen 8 bis 10, wobei das verjüngte Ende (22) des Trichters (2) zumindest im Wesentlichen vertikal nach unten zeigt und/oder der Trichter (2) oberhalb des Extruders (16) angeordnet ist.

12. Verwendung eines Extrudersystems nach den vorangehenden Ansprüchen 8 bis 11 zur Herstellung eines extrudierten und zu einem Bauteil eines Fahrzeugluftreifens weiterverarbeitbaren Endlosstreifens, wobei der eine hergestellte Endlosstreifen bevorzugt zu einem Laufstreifen eines Reifenrohlings zugeschnitten wird, wobei der zugeschnittene Laufstreifen des Reifenrohlings besonders bevorzugt zu einem Laufstreifen eines Fahrzeugluftreifens vulkanisiert wird.

13. Verwendung einer Vorrichtung nach einem der vorangehenden Ansprüche 1 bis 7 zum kontinuierlichen Speisen von Extrusions- und/oder Walzmaschinen (16) mit mindestens einem Kautschukmischungsfell (6).
